Europäisches Patentamt

European Patent Office

Office européen des brevets

(19)

(11) **EP 1 149 452 B1**

(12) **EUROPÄISCHE PATENTSCHRIFT**

(45) Veröffentlichungstag und Bekanntmachung des Hinweises auf die Patenterteilung:
**10.11.2004 Patentblatt 2004/46**

(21) Anmeldenummer: 00904967.7

(22) Anmeldetag: **27.01.2000**

(51) Int Cl.⁷: **H02H 9/02**

(86) Internationale Anmeldenummer:
**PCT/EP2000/000626**

(87) Internationale Veröffentlichungsnummer:
**WO 2000/045493 (03.08.2000 Gazette 2000/31)**

(54) **STROMBEGRENZER MIT ELEKTRISCHEN VENTILEN ZUM BEGRENZEN DES KURZSCHLUSSSTROMES IN EINEM ELEKTRISCHEN LEISTUNGSSTROMKREIS**

CURRENT LIMITER WITH ELECTRIC VALVES FOR LIMITING THE SHORT-CIRCUIT CURRENT IN AN ELECTRIC POWER CIRCUIT

LIMITEUR DE COURANT A SOUPAPES ELECTRIQUES POUR LA LIMITATION D'UN COURANT DE COURT-CIRCUIT DANS UN CIRCUIT ELECTRIQUE DE COURANT DE PUISSANCE

(84) Benannte Vertragsstaaten:
**AT BE CH CY DE DK ES FI FR GB GR IE IT LI LU MC NL PT SE**

(30) Priorität: **28.01.1999 DE 19903292**

(43) Veröffentlichungstag der Anmeldung:
**31.10.2001 Patentblatt 2001/44**

(73) Patentinhaber: **Forschungszentrum Karlsruhe GmbH**
**76133 Karlsruhe (DE)**

(72) Erfinder:
• **JÜNGST, Klaus-Peter**
  **D-76297 Stutensee (DE)**
• **KUPERMAN, Grigory**
  **D-76149 Karlsruhe (DE)**

(74) Vertreter: **Rückert, Friedrich, Dr. et al**
**Forschungszentrum Karlsruhe GmbH**
**Patente und Lizenzen**
**Weberstrasse 5**
**76133 Karlsruhe (DE)**

(56) Entgegenhaltungen:
**US-A- 3 099 789**

EP 1 149 452 B1

**Beschreibung**

Die Erfindung betrifft einen Strombegrenzer zur Begrenzung der Kurzschlußströme in Leistungsnetzen.

Zur Strombegrenzung in der Energietechnik werden warme Reaktoren sowie supraleitende Drosseln verwendet.

Die Aktivierung des Strombegrenzers besteht darin, daß sich im Kurzschlußfall ein ohmscher Widerstand, eine Induktivität, oder eine Kombination von beiden in geeigneter Höhe aufbaut. Bevorzugt wird, durch ein möglichst passiv triggerbares Element, dem Kurzschlußbegrenzer FCL ("Fault Current Limiter"), den Kurzschlußstrom zu begrenzen.

Supraleiter sind für diese Aufgabe besonders geeignet, da sie im Normalbetrieb nur einen kleinen Spannungsabfall haben und der Übergang in die Normalleitung den Aufbau eines hohen elektrischen Widerstandes und das Durchdringen magnetischer Flüsse bewirkt. Dies kann für eine resistive, bzw. induktive Strombegrenzerfunktion genutzt werden. ( Prof. Dr. techn. P. Komarek, Hochstromanwendung der Supraleitung, 1995).

Ein Supraleiterdraht ist bei Wechselstrombetrieb nicht verlustfrei, sondern stets sind zwei grundsätzliche Verlustmechanismen wirksam, nämlich Wirbelstromverluste in der Matrix und Ummagnetisierungsverluste ("Hystereseverluste") im harten Supraleiter selbst. Bei Gleichstrombetrieb sind die Verluste in dem Supraleiterdraht praktisch gering.

Aus der Literatur ist ein Strombegrenzer bekannt, dessen supraleitende Drossel durch Gleichrichter auf der Gleichstromseite geschaltet wird (Boenig, H.J., and D.A. Paice, 1983, Fault Current Limiter using a Superconducting Coil, IEEE Transactions on Magnetics, Vol. 19, no. 3, p. 1051, May). In Reihe mit der Drossel auf der Gleichstromseite ist eine Spannungsquelle geschaltet. Diese Spannungsquelle sichert das Fließen eines Stromes $I_0$ in der Drossel. Der Wert des Stromes $I_0$ übersteigt die Amplitude des Wechselstromes, welcher durch den Begrenzer fließt, solange kein Fehlerfall vorliegt, und ist wesentlich kleiner als der Kurzschlußstrom, die Brücke läßt dann auch den Laststrom durchfließen. Dabei ist der Spannungsabfall über dem Begrenzer gleich dem Spannungsabfall über den Ventilen in zwei Schultern der Brücken.

In der US 3,099,789 bzw. der FR-N° 1.337.971 wird ein elektrischer Schaltkreis vorgestellt, der aus einer Last besteht, die über eine Schutzschaltung an eine elektrische Energiequelle angeschlossen ist. Die Schutzschaltung dient zur Begrenzung der Stromänderung, um die Plötzlichkeit einer Stromänderung in der Last abzumildern. Die Schutzbeschaltung besteht aus zwei in Reihe geschalteten Induktivitäten, die von zwei in Reihe geschalteten, ungesteuerten Ventilen, Dioden, überbrückt sind, und die Dioden entgegengesetzte Durchlaßrichtung haben. Der gemeinsame Punkt der Dioden und der Induktivitäten sind direkt miteinander verbunden.

Ungesteuerte Ventile sperren nur bei den Strömen, die größer sind als der Ansprechstrom der Schutzeinrichtung, d.h. der Anfangsstrom in den Induktivitäten, und leiten die hohen Stromteile über die Induktivitäten. Dagegen werden die bei Wechselströmen immer auch vorhandenen kleineren Ströme nahezu ungehindert über die Dioden geleitet (Diodenwiderstand in Durchlaßrichtung). Der in den Induktivitäten fließende Strom kann dem nach dem Strommaximum wieder abnehmenden Netzstrom nicht folgen, da er durch die Dioden kurzgeschlossen wird, und bleibt im wesentlichen auf dem erreichten Wert stehen.

Die Betrachtung der jeweils nächsten Halbwelle wird aufgeteilt in Ströme unterhalb des Ansprechstroms und darüber. Kleinere Ströme nehmen den Weg über die leitende Diode, während die höheren Ströme über die Induktivitäten fließen und den dort bereits fließenden Strom erhöhen. Dieser Vorgang wiederholt sich mit jeder Halbwelle für den jeweils wirksamen Teil der Schaltung. Das führt bei einem Kurzschluß zu einem wesentlichen Anstieg des Stromes in den Induktivitäten und in den äußeren Stromkreisen während des Zeitintervalles, welches zum Abschalten der Einrichtung mindestens erforderlich ist (100 - 150 ms) und besonders während des Zeitintervalls, welches für die Sicherung des selektiven Ansprechens der Schutzeinrichtungen benötigt wird (1 - 2 s).

Durch die Verwendung von aktiv halbgesteuerten Ventilen, z. B. Thyristoren, in Brückenschaltung wird eine effektivere Begrenzung des Kurzschlußstromes erreicht(Boenig, H.J., and D.A. Paice, 1983, Fault Current Limiter using a Superconducting Coil, IEEE Transactions on Magnetics, Vol. 19, no. 3, p. 1051, May; FR-N° 1.337.971). Allerdings ist in diesem Fall eine spezielle Apparatur erforderlich, welche einen Kurzschluß identifiziert und den Steueralgorithmus für die Thyristoren in der Brücke verändert, d. h. in diesem Fall handelt es sich nicht um einen sicher arbeitenden Strombegrenzer mit passiver Triggerung, wie es der Aufgabenstellung entspricht. Der Strombegrenzer ist in diesem Fall kein passiv triggerbares Element mehr. Der abschaltbare Strombegrenzer benötigt eine spezielle Steuereinheit für den Thyristor, was die Zuverlässigkeit des Strombegrenzers wesentlich verringert.

Im Fehlerfall, wenn die Amplitude des Wechselstromes den Wert $I_0$ in der Drossel übersteigt, wird der Kurzschlußstrom durch die Induktivität der Drossel begrenzt. Die Begrenzung des Kurzschlußstromes wird durch den Wert der maximalen Energie bestimmt, welche während des transienten Prozesses in der Drossel gespeichert wird:

$$W_{max} = 1/2 * L * I_{max}^2$$

Eine Optimierung des Strombegrenzers bedeutet eine Minimierung der in der Drossel gespeicherten Energie ($W_{max}$).

Der Erfindung liegt die Aufgabe zugrunde, einen im Kurzschlußfall zuverlässigen, einfach aufgebauten Strombegrenzer bereit zu stellen, welcher eine Begrenzung des Kurzschlußstromes sowohl in den ersten 100 - 150 msec als auch in den folgenden 1 bis 2 sec sichert, was für die Selektivität des Auslösens der Schutzeinrichtung entscheidend ist. Kurz, es soll die Ansprechzeit des Strombegrenzers reduziert werden.

Die Aufgabe wird durch einen Strombegrenzer gemäß dem Oberbegriff und dem kennzeichnenden Merkmal des Anspruch 1 gelöst.

Das wird dadurch erreicht, daß ein bekannter Strombegrenzer, der aus zwei in Reihe geschalteten Induktivitäten/Drosseln besteht, von zwei in Reihe geschalteten, halbgesteuerten Ventilen mit entgegengesetzten Durchlaßrichtung überbrückt sind. Der gemeinsame Punkt der Ventile 3 und 4 ist mit dem gemeinsamen Punkt der Induktivitäten 1 und 2 nicht notwendigerweise direkt verbunden.

Im Fehlerfall, also beim Überschreiten eines vorgegeben hohen Stromes, der über dem Nennstrom liegt, begrenzt der Strombegrenzer dadurch, dass er, weil bei der Inbetriebnahme oder dem Einschalten die halbleitenden Ventile über eine externe Steuerung gezündet wurden, automatisch vom leitenden in den sperrenden Zustand übergeht, d.h. ohne zusätzliche Steuersignale von außen, und in diesem bleibt.

Die beiden Ventile sind halbgesteuert. Es sind Thyristoren (Anspruch 2).

In der Verbindung vom gemeinsamen Potentialpunkt der Ventile zum gemeinsamen der Drosseln, sitzt eine steuerbare Spannungsquelle (Anspruch 3).

In den jeweiligen Kreis, der von der Induktivität mit parallel geschaltetem Ventil gebildet wird, ist eine steuerbare Spannungsquellen geschaltet(Anspruch 4),

Vorteil des Strombegrenzers ist, daß es sich um eine im Kurzschlußfall passiv getriggerte Strombeschaltung handelt, welche eine Begrenzung des Kurzschlußstromes sowohl in den ersten 100 - 150 ms als auch in den folgenden 1 - 2 s sichert, wobei im Kurzschlußfall der Strom durch den induktiven Widerstand der Drosseln im Wechselstromkreis begrenzt wird und bei normalem Betrieb der Spannungsabfall über dem Strombegrenzer praktisch dem Spannungsabfall über den Ventilen entspricht.

Bei Verwendung von halb gesteuerten Ventilen, wie Thyristoren beispielsweise, wird eine automatische Begrenzung des Kurzschlußstromes ohne zusätzliche Steuersignale von außen verwirklicht. Halbgesteuerte Ventile verändern die Funktion der Schaltung entscheidend. Sie sperren automatisch nach dem Auftreten eines Kurzschlusses innerhalb der Zeitspanne von einer oder mehreren Perioden der Wechselspannung und bleiben gesperrt bis zum völligen Abschalten des havarierten Stromkreises. Das sichert eine effektive Begrenzung des Stromes durch zwei in Reihe geschaltete Drosseln für die Netzströme unabhängig von ihrer Größe zu allen Zeiten.

Vollgesteuerte Ventile wie Transisstoren benötigen eine besondere Ansteuerschaltung. Vollgesteuerte Ventile bedeuten schaltungstechnisch einen anderen, erheblichen Aufwand.

Bei normalem Betrieb fließt über die strombegrenzenden Drosseln ein Quasigleichstrom. Das bedeutet: minimale Verluste in diesen Elementen.

Die Vorteile des Strombegrenzers sind folgende:

eine Reduktion der Baugröße der Drosseln,
kleiner Netz- Innenwiderstand und kleine Kurzschlußströme, Dimensionierung der Anlagen und Betriebsmittel für kleinere Kurzschlußströme,
entscheidende Erhöhung der Zuverlässigkeit des Strombegrenzers, Verlängerung der Lebensdauer von Anlagen und Betriebsmitteln geringere Auswirkungen an der Fehlerstelle,
größere Effektivität bei der Begrenzung von Kurzschlußströmen geringe Verluste bei normalem Betrieb.

Die Erfindung wird anhand eines Durchführungsbeispiels und in Anlehnung an die Zeichnungen näher erläutert.

Es zeigen:

Figur 1. das Schaltprinzip des Strombegrenzers,
Figur 2. den Strombegrenzer mit der Spannungsquelle zwischen dem gemeinsamen Punkt der Ventile und dem gemeinsamen Punkt der Drosseln,
Figur 3. den Strombegrenzer mit zwei Spannungsquellen,
Figur 4. den zeitliche Verlauf des Stromes in den Elementen des Strombegrenzers,
Figur 5 Verlauf des Fehlerstromes in einem Strombegrenzer mit ungesteuerten Ventilen,
Figur 6 Einsatzzeitfenster des Fehlerstromes.

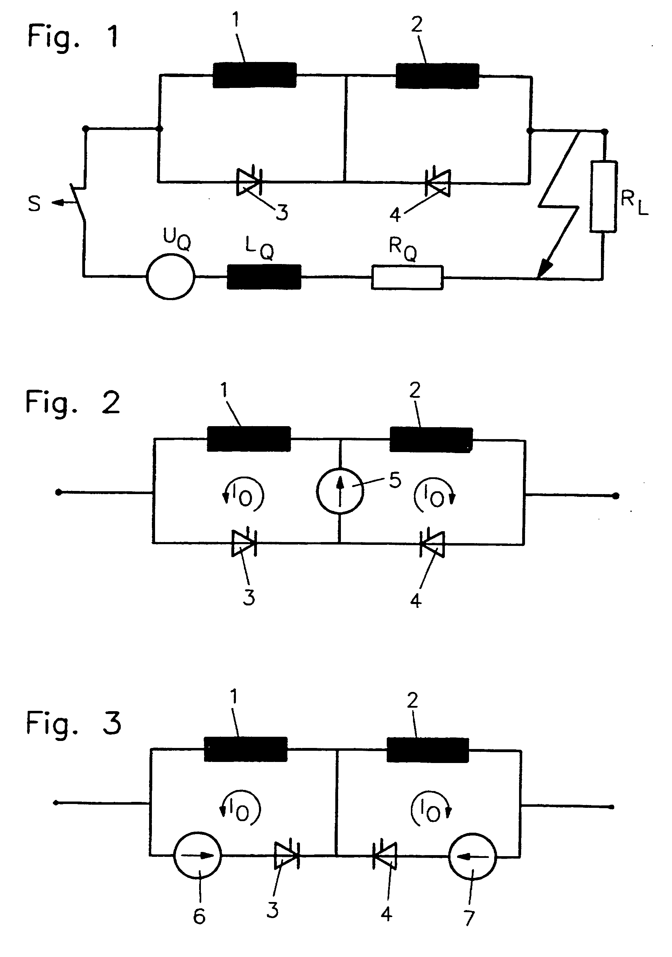

Geläufige Dinge wie Schutzbeschaltung und eine daran gekoppelte Steuerelektronik sind der Übersicht halber und wegen bekannter Technik nicht in die Figuren 1-6 eingezeichnet.

Das Funktionsprinzip des Strombegrenzers wird anhand der Einrichtung untersucht, die mit Thyristoren als halbgesteuerte Ventile 3 und 4 aufgebaut ist.

Bei Inbetriebnahme der Einrichtung erfolgt ein Zünden der Thyristoren 3 und 4 und ein Ansteigen des Stromes durch die Drosseln 1 und 2 bis zum Strom $I_0$ dessen Wert die Amplitude des Wechselstromes $I_{max}$ übersteigt, welcher durch den Begrenzer im Normalbetrieb fließt und kleiner ist als der Kurzschlußstrom. Nach dem Ansteigen des Stromes in der Drosseln 1 und 2 bis $I_0$ ändert sich der Strom durch die Thyristoren 3 und 4 im Normalbetrieb während einer Periode des Wechselstromes entsprechend den folgenden Gleichungen (1):

$$I_3 = I_0 + I_{MAX} \sin(\omega t + \varphi_0),$$

$$I_4 = I_0 - I_{MAX} \sin(\omega t + \varphi_0)$$

Der Strom durch die Drosseln bleibt dabei gleich $I_0$.

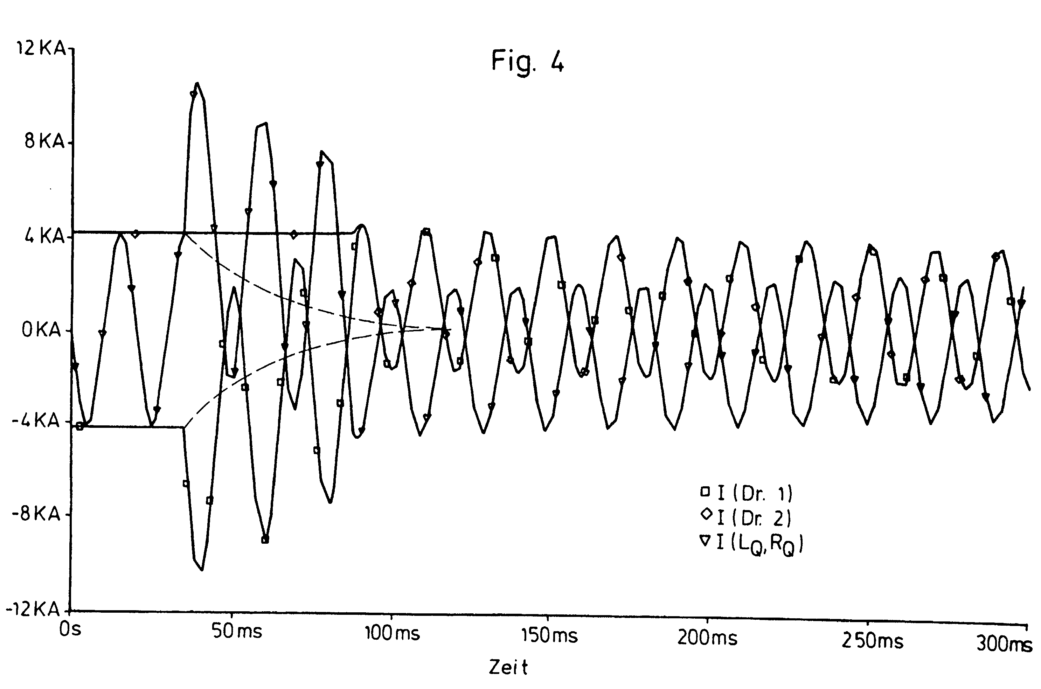

Bei Auftreten eines Kurzschlusses sperrt (nichtleitend) zunächst einer der Thyristoren, z. B. Thyristor 3 , da eine umgekehrte Spannung an dem Thyristor 3 auftritt. Ist der Zeitraum, während dem eine umgekehrte Spannung an dem Thyristor 3 anliegt, gleich oder größer, als die Zeit der Wiederherstellung der elektrischen Festigkeit des Thyristors, wie in Figur 4 gezeigt, bleibt der Thyristor 3 in diesem Zustand, andernfalls entsteht eine ähnliche Situation mit dem Thyristor 4. Dabei wächst der Strom in Drossel 1 und wird den Wert $I_0$ übersteigen. Für die Zeitdauer, während der nur der Thyristor 3 sperrt, ist die Eingangsspannung

$$U = U_{MAX} \sin(\omega t + \psi_{01}),$$

und der Strom in Drossel 1 kann über folgende Gleichung bestimmt werden:

$$I_1 == (U_{MAX}/\omega L_1) * \sin(\omega t + \psi_1) - (U_{MAX}/\omega L_1) * \sin \Psi_1 * e^{-t/\tau 1} + I_0 * e^{-t/\tau 1} \qquad (2),$$

wobei
$\psi_{01}$ der Phasenwinkel ist, der vom Sperrzeitpunkt des Thyristor 3 definiert wird,
$\psi_1$ der Phasenwinkel ist, der vom Sperrzeitpunkt des Thyristor 3 und $\omega L_1/R_1$ definiert wird, und zwar mit

$$\psi_1 = \psi_{01} - \varphi_1,$$

und damit

$$\varphi_1 = \text{arctg}(\omega L_1/R_1).$$

$R_1$ ist der Widerstand des kurzgeschlossenen Kreises,
$L_1$ die Induktivität L der Drossel 1 bzw. der Drossel 2, plus der Quellinduktivität $L_Q$.
$t_1 = L_1/R_1$ ist die Zeitkonstante.
In diesem Zeitraum ändert sich der Strom über den Thyristor 4 entsprechend der folgenden Gleichung:

$$I_4 = I_{L1} + I_0 = (U_{MAX}/\omega L_1) * (\sin(\omega t + \psi_1) - \sin \Psi_1 * e^{-t/\tau 1}) + I_0 * (1 + e^{-t/\tau 1}) \qquad (3)$$

und der Strom in der Drossel 2 ist praktisch gleich $I_0$. Wie man aus der Gleichung (3) sieht, wächst der Strom im kurzgeschlossenen Kreis in der anderen Richtung bis zum Wert $I_0$.

Bei der Erfüllung der Bedingung $|I_2| \geq |-I_0|$ liegt auch an dem zweiten Ventil (4) eine umgekehrte Spannung und es sperrt. Ist der Zeitraum, während dessen eine umgekehrte Spannung an den Thyristor 4 anliegt, gleich oder größer als die Zeit der Wiederherstellung der elektrischen Festigkeit des Thyristors, bleibt Thyristor 4 in diesem Zustand. Anderenfalls entsteht diese Situation später, in einer oder mehreren Wechselstromperioden.

Für die Zeitdauer, während der beide Thyristoren geschlossen sind, bei der Eingangsspannung

$$U = U_{MAx} \sin(\omega t + \psi_{02}),$$

kann der Strom in der Drosseln 1 und 2 über folgende Gleichung bestimmt werden:

$$I_1 = I_2 = (U_{MAX}/\omega L_2)*(\sin(\omega t + \psi_2) - \sin\Psi_2 * e^{-t/\tau 2}) - I_0 * e^{-t/\tau 2} \tag{4},$$

wo

$$L_2 = 2L + L_Q \text{ und } \tau_2 = L_2/R_2$$

ist.

$R_2$ ist der Widerstand des kurzgeschlossenem Kreises bei zwei in Reihe geschalteten Drosseln.
$\psi_{02}$ ist der Phasenwinkel, er wird vom Sperrzeitpunkt des Thyristor 4 definiert, und
$\psi_2$ ist der Phasenwinkel, der vom Sperrzeitpunkt des Thyristor 4 und auch $\omega L_2/R_2$ definiert wird, und zwar

$$\psi_2 = \psi_{02} - \varphi_2 \text{ mit } \varphi_2 = \text{arctg}(\omega L_2/R_2).$$

Die Zeitdauer zwischen dem Auftreten des Kurzschlusses und dem Schließen des ersten Ventils kann in Abhängigkeit von der Phasenlage $\psi_{01}$ und der Dimensionierung der Elemente des Strombegrenzers zwischen ca. 0,5 ms und ca. 20 ms schwanken.

Die Zeitdauer vom Sperren des ersten Thyristors bis zum Sperren des zweiten Thyristors kann in Abhängigkeit von der Phasenlage $\psi_{02}$ und der Dimensionierung der Elemente des Strombegrenzers zwischen ca. 3 ms und ca. 260 ms schwanken. Nach dem Sperren beider Thyristoren wird der Kurzschlußstrom durch die Induktivität von zwei in Reihe geschalteten Drosseln bestimmt. Wie aus Figur 4 ersichtlich, steigt der Kurzschlußstrom in dem Zeitraum, wenn nur ein Thyristor gesperrt ist, bis auf etwa den 2- bis 3-fachen Wert von $I_{max}$ an. Nach dem Sperren des zweiten Ventils verringert sich die Amplitude des Stromes bis zu einem Wert in der Nähe von $I_{max}$. d.h. in diesem Beispiel sogar bis zu einem Wert, der praktisch dem normalen Betrieb entspricht.

Der Strombegrenzer mit den beiden Thyristoren gemäß der Schaltung nach Figur 2 oder 3 wird im folgenden an einem speziellen Auslegung untersucht. Die Dimension der Komponenten des Strombegrenzers und die Parameter der Energieübertragungsleitung und der Last sind folgende:

| Quellspannung | $U_{MAX}$ = 410 kV, |
|---|---|
| Ohmscher Widerstand der Quelle | $R_Q$ = 0,24 $\Omega$, |
| Induktiver Widerstand der Quelle | $L_Q$ = 6 mH, |
| Ohmscher Widerstand der Last | $R_L$ = 100 $\Omega$, |
| Induktivität der Drossel 1 | L = 0,2 H, |
| Induktivität der Drossel 2 | L = 0,2 H, |

In Figur 4 sind die Kurven der Ströme gezeigt, die durch die Drosseln 1 und 2 fließen sowie durch den zu schützenden Kreis, der die Drossel 2 kurzschließt. In diesem Fall übersteigt die Amplitude des Stromes bei einem Kurzschluß in der Last den Normalstrom ungefähr um das 2,7-fache. Etwa 50 ms nach Entstehen des Kurzschlusses stellt sich im Strombegrenzer ein Zustand ein, bei dem der Strom praktisch gleich dem Normalstrom ist. Dabei erfolgt der Übergang in das Strombegrenzungsregime automatisch, ohne irgendwelche äußeren Steuersignale für die Thyristoren 3 und 4. Der Strombegrenzer triggert sich selbst oder passiv aufgrund des Fehlerzustands.

Um die Leistungsfähigkeit des Strombegerenzers mit Thyristoren aufzuzeigen, wird der Strombegrenzer mit gleichen Bauteiledimensionen jedoch mit Dioden als ungesteuerte Ventile gegenübergestellt.

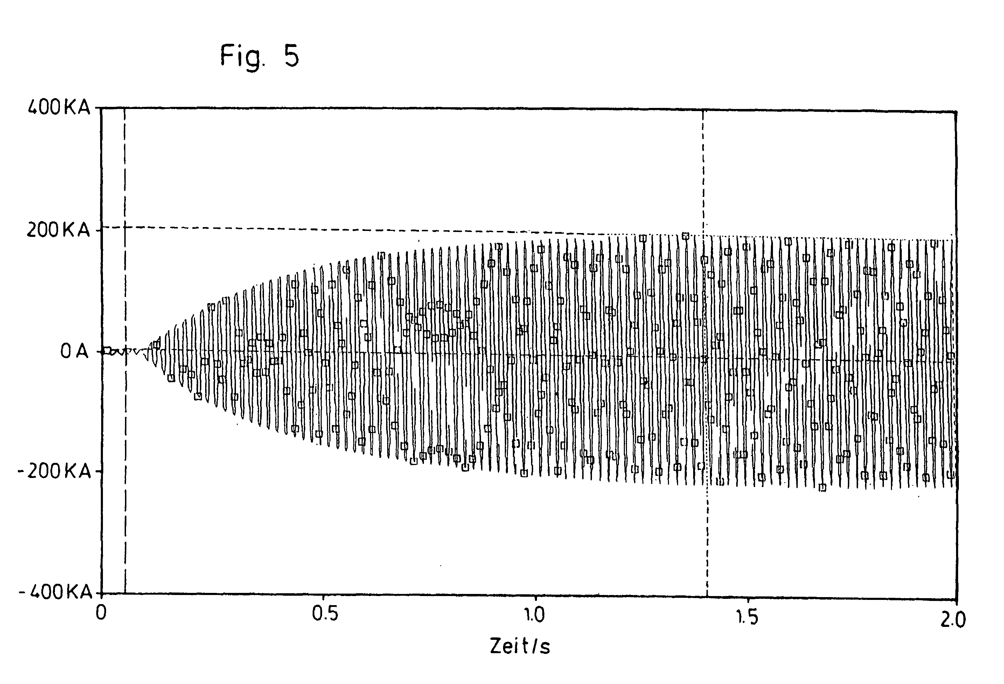

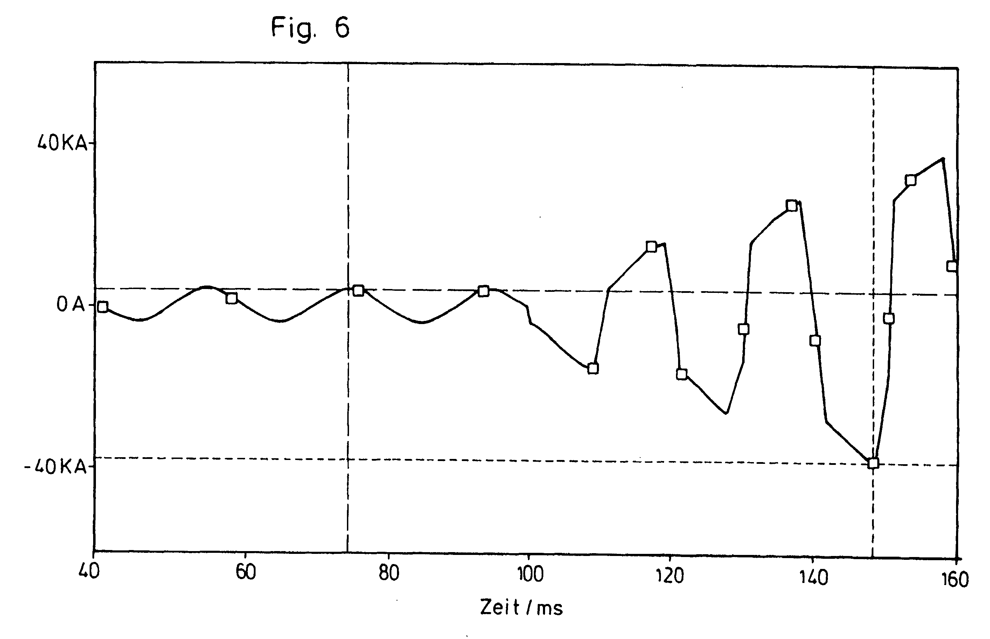

Das Ergebniss ist in Fig. 5 mit großem Zeitfenster, 2 s, und in Figur 6 mit kleinem Zeitfenster, 160 ms, um den Einsatzzeitpunkt des Fehlerstromes dargestellt. Ein Vergleich der Kurven aus Fig. 4 und Fig. 5 zeigt, daß bei gleichen Parametern des Stromkreises, inklusive der Induktivität der Drosseln 1 und 2 der Strom durch den zu schützenden Stromkreis bei 150 ms nach Eintritt des Kurzschlusses in der erfindungsgemäßen Ausführung um das 9-fache und nach 1,5 s um das 50-fache kleiner ist als im Fall mit Dioden. Im Fall des Abschaltens des gestörten Stromkreises nach 2 s oder später ist die Effektivität des Strombegrenzers mit Thyristoren noch höher.

Eine weitere Untersuchung zeigt, wenn in dem Strombegrenzer mit Dioden als Ventile die Induktivität der Drosseln so weit erhöht wird, daß dieselbe Strombegrenzung erreicht wird, wie die maximalen Werte mit dem erfindungsgemäßen Strombegrenzer mit Thyristoren, muß die Induktivität der Drosseln von 0,2 H auf 20 H erhöht werden. Das sind zwei Größenordnungen mehr.

Für die Sicherung der Selektivität des Ansprechens der Schutzeinrichtungen bei einem Kurzschluß ist eine Verzögerung der Stromabschaltung von 1,5 bis 2 s erforderlich. Der erfindungsgemäße Strombegrenzer hat bei einer solchen Abschaltverzögerung eine Gesamtenergiekapazität der strombegrenzenden Drosseln um mehr als 2 Größenordnungen niedriger, als mit Strombegrenzern mit Dioden. Das ist bei der Konzipierung und Realisierung ein wirtschaftlich entscheidender Vorteil.

**Patentansprüche**

1. Strombegrenzer mit elektrischen Ventilen zum Begrenzen des Kurzschlußstromes in einem elektrischen Leistungsstromkreises, bestehend aus:

   zwei in Reihe zueinander geschalteten Induktivitäten/Drosseln (1, 2),
   zwei in Reihe zueinander geschalteten, zu den in Reihe geschalteten Drosseln (1, 2) parallel liegenden Ventilen (3, 4) die in ihrer Durchlaßrichtung, entgegengesetzt zueinander gerichtet sind,
   einer Verbindung vom gemeinsamen Potentialpunkt der Ventile (3, 4) zum dem gemeinsamen der beiden Induktivitäten (1, 2),

   **dadurch gekennzeichnet, dass**
   die Ventile (3, 4) halbgesteuerte Ventile sind,
   die bei Inbetriebnahme des Strombegrenzers durch externe Steuerung gezündet werden und
   der Strombegrenzer den Strom im Fehlerfall beim Überschreiten einer vorgegebenen Stromschwelle dadurch automatisch begrenzt, dass die Ventile (3, 4) ohne zusätzliche Steuersignale von außen vom leitenden in den sperrenden Zustand gehen und in diesem bleiben.

2. Strombegrenzer nach Anspruch 1,
   **dadurch gekennzeichnet,**
   **daß** die beiden Ventile (3, 4) Thyristoren sind.

3. Strombegrenzer nach den Anspruch 1 und 2,
   **dadurch gekennzeichnet,**
   **daß** in der Verbindung vom gemeinsamen Potentialpunkt der Ventile (3, 4) zum gemeinsamen der beiden Drosseln (1, 2) eine steuerbare Spannungsquelle (5) liegt.

4. Strombegrenzer nach de Ansprüchen 1 und 2,
   **dadurch gekennzeichnet,**
   **daß** zu den beiden Ventilen (3, 4) jeweils eine steuerbare Spannungsquelle (6, 7) in Reihe und in Durchlaßrichtung des jeweiligen Ventils (3 oder 4) geschaltet ist und der gemeinsame Punkt der Drosseln (1, 2) mit dem gemeinsamen Punkt der Ventile (3, 4) direkt verbunden ist.

**Claims**

1. Current limiter with electric valves to limit the short-circuit current in an electric power current circuit, which consists of:

   Two inductors/reactance coils connected in series (1, 2),
   two valves (3, 4) that are connected in series and parallel to the reactance coils (1, 2) connected in series, with these valves having opposite conducting direction,
   a connection between the common potential point of the valves (3, 4) and the common point of both inductors (1, 2),

   and **characterized by**

the valves (3, 4) being half-controlled valves that are triggered externally when starting up the current limiter and the current limiter automatically limiting the current in case of a failure when exceeding a given current threshold by the valves (3, 4) changing from the conducting to the non-conducting state and remaining in this state without additional control signals from outside.

2. Current limiter according to Claim 1,
   **characterized by** both valves (3, 4) being thyristors.

3. Current limiter according to Claims 1 and 2,
   **characterized by**
   a controllable voltage source (5) being located in the connection between the common potential point of the valves (3, 4) and the common point of both reactance coils (1, 2).

4. Current limiter according to Claims 1 and 2,
   **characterized by**
   a controllable voltage source each (6, 7) being connected in series with both valves (3, 4) and in conducting direction of the respective valve (3 or 4) and the common point of the reactance coils (1, 2) being connected directly with the common point of the valves (3, 4).

**Revendications**

1. Limiteur de courant avec des soupapes électriques destinées à limiter le courant de court-circuit dans un circuit électrique de puissance et qui consiste en:

   - deux inductances/bobines de réactance (1, 2) montées en série les unes par rapport aux autres,

   - deux soupapes (3) montées en série l'une par rapport à l'autre, parallèles aux bobines de réactance en série et dont le sens de conduction se dirige en sens inverse les unes par rapport aux autres,

   - une liaison entre le point de potentiel commun des soupapes (3, 4) et celui des deux inductances (1, 2),

   **caractérisé en ce que**

   - les soupapes (3, 4) sont des soupapes semi-commandées, amorcées par une commande externe au moment de la mise en service du limiteur de courant et que

   - le limiteur, en cas de défaillance, au dépassement d'un seuil de courant prédéfini, limite automatiquement le courant en faisant passer les soupapes (3, 4) de l'état conducteur à l'état d'arrêt où elles persistent, sans signal de commande supplémentaire extérieure.

2. Limiteur de courant selon la revendication 1,
   **caractérisé en ce que**
   les deux soupapes (3, 4) sont des thyristors.

3. Limiteur de courant selon les revendications 1 et 2,
   **caractérisé en ce**
   **qu'**une source de tension réglable se situe dans la liaison entre le point de potentiel commun des soupapes (3, 4) et celui des deux bobines de réactance (1, 2).

4. Limiteur de courant selon les revendications 1 et 2,
   **caractérisé en ce**
   **qu'**une source de tension (6, 7) réglable respective est connectée à chacune des deux soupapes (3, 4), en série et dans le sens de conduction de la soupape respective (3 ou 4) et que le point commun des bobines de réactance (1, 2) est directement lié avec le point commun des soupapes (3, 4).

Fig. 1

Fig. 2

Fig. 3

Fig. 4

Fig. 5

EP 1 149 452 B1

Fig. 6